# EUROPEAN PATENT APPLICATION

(11) **EP 3 419 152 A1**
(43) Date of publication of application: **26.12.2018**
(21) Application number: 17177120.7
(22) Date of filing: 21.06.2017
(51) Int. Cl.: H02M 1/32, H02M 3/335

(54) **SWITCHED-MODE POWER SUPPLY AND METHOD OF OPERATION**

(71) Applicant: Vestel Elektronik Sanayi ve Ticaret A.S., 45030 Manisa (TR)
(72) Inventor: ERDINÇ, Cihan, 45030 Manisa (TR); SAGLAM, Üstün, 45030 Manisa (TR)
(74) Representative: Flint, Adam

(57) **Abstract**

A switched-mode power supply (10) has a transformer (20) which has a primary winding (22) and at least one secondary winding (24). The voltage of an alternating current which is input to the primary winding (22) of the transformer (20) is controlled. A synchronous rectifier (40) has an active switch for rectifying an alternating current which is output from the secondary winding (24) to a direct current which is to be output by the power supply (10). A rectifier switching controller (30) provides an output to control the active switch. A comparator (60) compares the output of the rectifier switching controller (30) with a reference. The comparator (60) outputs a control signal to the transformer switching controller (70) to cause the voltage of the alternating current which is input to the primary winding (22) to be reduced in the case that the output of the rectifier switching controller (30) exceeds the reference.

## Description

### Technical Field

The present disclosure relates to a switched-mode power supply and a method of operating a switched-mode power supply.

### Background

A switched-mode power supply (also known variously as a switching-mode power supply, switch-mode power supply, switched power supply, SMPS, or switcher) is an electronic power supply that incorporates a switching controller to convert electrical power efficiently. A switched-mode power supply may have a transformer for varying an input voltage to a different output voltage. In many applications, it is necessary to ensure that the output power from the transformer does not exceed some threshold and/or to ensure that the temperature of the transformer does not exceed some threshold.

### Summary

According to a first aspect disclosed herein, there is provided a switched-mode power supply comprising:
a transformer, the transformer comprising a primary winding and at least one secondary winding;
a transformer switching controller arranged to control the voltage of an alternating current which is input to the primary winding of the transformer;
a synchronous rectifier comprising an active switch for rectifying an alternating current which is output from the secondary winding to a direct current which is to be output by the power supply;
a rectifier switching controller arranged to provide an output to control the active switch of the synchronous rectifier; and
a comparator, the comparator being arranged to compare the output of the rectifier switching controller to the active switch of the synchronous rectifier with a reference, the comparator being arranged to output a control signal to the transformer switching controller to cause the voltage of the alternating current which is input to the primary winding of the transformer to be reduced in the case that the output of the rectifier switching controller exceeds the reference.

In an example, the active switch of the synchronous rectifier comprises at least one transistor and the output of the rectifier switching controller is arranged to drive the gate of the transistor.

In an example, the switched-mode power supply comprises a square wave generator arranged to provide the reference in the form of a square wave. In an example, the square wave generator is arranged to synchronise the output square wave with operation of the synchronous rectifier.

In an example, the transformer comprises a plurality of secondary windings each for providing a respective output alternating current; and
the switched-mode power supply comprises:
a corresponding plurality of synchronous rectifiers, each synchronous rectifier being arranged to receive an output from a respective secondary winding, each synchronous rectifier comprising an active switch for rectifying an alternating current which is output from the respective secondary winding to a direct current which is to be output by the power supply;
a corresponding plurality of rectifier switching controllers, each rectifier switching controller being arranged to provide an output to control the active switch of the respective synchronous rectifier; and
a corresponding plurality of comparators, each comparator being arranged to compare the output of a respective rectifier switching controller to the active switch of the synchronous rectifier with a respective reference, the comparator being arranged to output a control signal to the transformer switching controller to cause the voltage of the alternating current which is input to the primary winding of the transformer to be reduced in the case that the output of the rectifier switching controller exceeds the reference.

In an example, the switched-mode power supply comprises a corresponding plurality of square wave generators arranged to provide the references to the respective comparators.

According to a second aspect disclosed herein, there is provided a method of operating a switched-mode power supply, the method comprising:
controlling the voltage of an alternating current which is input to a primary winding of a transformer of the switched-mode power supply;
controlling an active switch of a synchronous rectifier with an output of a rectifier switching controller to rectify an alternating current which is output from a secondary winding to a direct current which is to be output by the power supply; and
comparing the output of the rectifier switching controller to the active switch of the synchronous rectifier with a reference, and outputting a control signal to cause the voltage of the alternating current which is input to the primary winding of the transformer to be reduced in the case that the output of the rectifier switching controller exceeds the reference.

### Brief Description of the Drawings

To assist understanding of the present disclosure and to show how embodiments may be put into effect, reference is made by way of example to the accompanying drawings in which:
Figure 1 shows a schematic block diagram of an example of a switched-mode power supply in accordance with an aspect described herein; and
Figure 2 shows schematically an example of variation of the gate voltage of a transistor of a synchronous rectifier with current flowing through the transistor of the synchronous rectifier.

### Detailed Description

As mentioned, a switched-mode power supply is an electronic power supply that incorporates a switching controller to convert electrical power efficiently. A switched-mode power supply may have a transformer for varying an input voltage to a different output voltage. The switching controller controls the voltage of an alternating current which is input to a primary winding of the transformer.

In many applications, it is necessary to ensure that the output power from the transformer does not exceed some threshold and/or to ensure that the temperature of the transformer during operation does not exceed some threshold. In one standard safety test, the switched-mode power supply is operated so that the output power of the transformer is at a maximum and the temperature of the transformer is monitored. The temperature must remain below some threshold in order for the switched-mode power supply to pass the test. To ensure that the transformer passes the test, it is known to provide the switched-mode power supply with some protection such as maximum power protection, maximum current protection or maximum voltage protection, whereby the output power or current or voltage respectively is monitored and the switched-mode power supply is shut down if the maximum is exceeded. This is however a rather simple "brute force" way of protecting the transformer and/or switched-mode power supply as a whole.

For many applications, a DC (direct current) output from the switched-mode power supply is required. Accordingly, the switched-mode power supply often has a rectifier which receives an AC (alternating current) which is output from a secondary winding of the transformer and converts it to DC. The DC output may be used to drive a device. The device may be one of many different types, including for example a component of a computer or other electronics device, including for example a television set, a DVD player, a set-top box, a display device (such as an LCD (liquid crystal display) screen, an OLED (organic light emitting diode) display screen, etc.), etc. The component may be for example a hard disk drive, one or more processors or integrated circuits, memory (e.g. RAM), a display device, an audio amplifier, etc.

In addition, in many applications, plural DC outputs are required from the switched-mode power supply. This is common in applications where the switched-mode power supply is supplying a complex product, which has a number of components which require different operating voltages (such as 3.3V, 5V, 12V, etc.). This includes for example computers and other electronics devices mentioned above, which will typically have numerous electronic components that require different input operating voltages. A switched-mode power supply may therefore have a transformer that has plural secondary windings each connected to provide an output to a corresponding rectifier. In such a case, having a protection based on the maximum power, maximum current or maximum voltage output for the transformer as a whole may not be adequate and/or may not be most efficient. For example, such overall protection does not protect each of the multiple outputs separately.

Where a switched-mode power supply is to provide one or more DC outputs and therefore has one or more rectifiers, synchronous rectification (also known as active rectification) may be used. In such a case, instead of using diodes, the or each rectifier uses one or more active switches to carry out the rectification from AC to DC. This can lead to much greater efficiency for the rectification and therefore the switched-mode power supply as a whole as it can significantly reduce power losses during the rectification. The active switch or switches may be for example transistors, including for example (power) MOSFETs (metal-oxide semiconductor field-effect transistors) and (power) bipolar transistors such as BJTs (bipolar junction transistors). As known, a MOSFET for example has a very low on-resistance R_{DS(on)}, meaning that the voltage drop across the MOSFET is low when conducting. The contrasts with the relatively high voltage drop across a diode, which leads to high power loss, which is undesirable of itself but also leads to (over)heating of the transformer. A controller provides a drive voltage to the gate of the or each MOSFET to control the switching of the MOSFET and therefore the rectification of AC to DC. The controller is usually synchronised with the input AC to ensure that the or each MOSFET is switched on and off at the correct times to achieve the desired rectification.

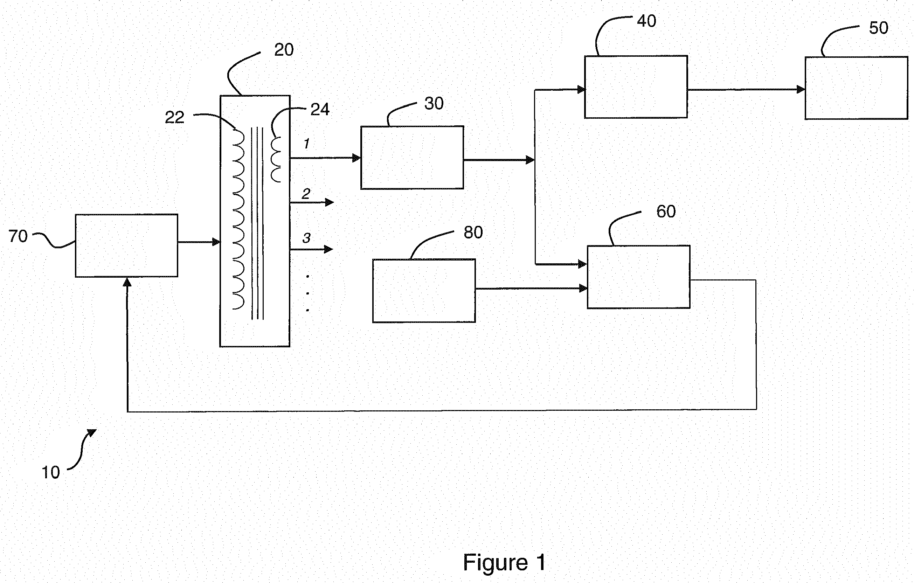

Referring now to Figure 1, there is show a schematic block diagram of an example of a switched-mode power supply 10 in accordance with an aspect described herein. The power supply 10 has a transformer 20. The transformer 20 has a primary winding 22 and at least one secondary winding 24. In this example, the transformer 20 has several secondary windings 24, indicated by the numerals *1, 2, 3...* In the following, a description will be given of a circuit arrangement relating to the first secondary winding 24, it being understood that the same or similar circuit arrangement may be provided for each secondary winding 24. Likewise, an example circuit arrangement for the secondary windings 24 is only shown in full in Figure 1 for the first secondary winding 24.

The output of the secondary winding 24 is passed to a rectifier switching controller 30. The rectifier switching controller 30 may be provided in the form of for example an integrated circuit. The rectifier switching controller 30 provides an output to control a synchronous rectifier 40. The synchronous rectifier 40 rectifies the AC output by the secondary winding 24 to DC which is provided to an output 50 which, in turn in use is connected to a device or component that is to be powered by the power supply 10. The output of the synchronous rectifier 40 may be smoothed or filtered to provide a steady DC output.

The synchronous rectifier 40 comprises one or more active switches that carry out the rectification under control of the rectifier switching controller 30. The or each active switch may comprise a transistor. The transistors may be selected from for example (power) MOSFETs and (power) bipolar transistors such as BJTs. In a manner known per se, the output of the rectifier switching controller 30 in this case is a drive voltage which drives the gate of the or each transistor to control the switching of the transistor and therefore the rectification of AC to DC.

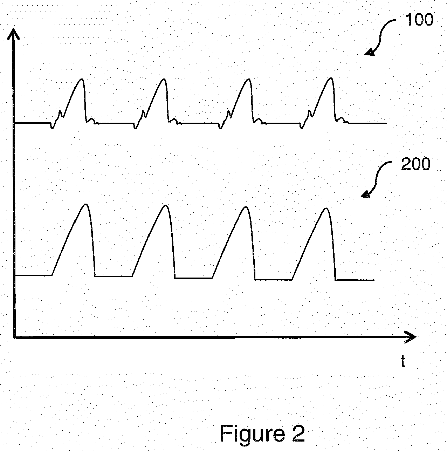

Referring briefly to Figure 2, this shows schematically an example of variation of the gate voltage 100 of a transistor of the synchronous rectifier 40 with current 200 flowing through the transistor of the synchronous rectifier 40. The current that is flowing through the transistor of the synchronous rectifier 40 is sensed by the rectifier switching controller 30 which sets the gate voltage accordingly. As can be seen in Figure 2, as the gate voltage 100 increases, the current 200 flowing through the transistor correspondingly increases, and as the gate voltage 100 decreases, the current 200 flowing through the transistor correspondingly decreases.

In accordance with the present disclosure, a comparator 60 is provided to compare the output of the rectifier switching controller 30, which is provided to the active switch of the synchronous rectifier 40, with a reference. As mentioned, in this example, the active switch of the synchronous rectifier 40 is a transistor and the output of the rectifier switching controller 30 is a voltage that is applied to the gate of the transistor. Accordingly, in this example, the reference is in effect a maximum gate voltage that should be applied to the gate of the transistor of the synchronous rectifier 40. That reference, in this case the maximum gate voltage that should be applied, may be determined previously by testing the power supply 10 in use and finding the maximum that may be used whilst keeping the temperature of the power supply 10, and more specifically the transformer 20, below a desired or specified maximum. The comparator 60 is arranged such that if the output of the rectifier switching controller 30 exceeds the reference, then the comparator 60 outputs a corresponding control signal to a transformer switching controller 70. The control signal is such as to cause the transformer switching controller 70 to operate such that the voltage of the alternating current which is input to the primary winding 22 of the transformer 20 to be reduced, optionally to zero (i.e. in effect to switch off the transformer 20 and therefore the power supply 10 a whole). This provides a simple and effective way of controlling the output of the power supply 10.

In a switched-mode power supply 10 which is for connection to an AC input power source, such as a mains electricity power supply, it is common for the input AC first to be rectified and filtered to provide a DC signal. That DC signal is then passed to a high frequency switch which inverts the DC signal to a high frequency AC signal. This process is principally to avoid an audible mains hum which can otherwise occur if for example a 50Hz mains electricity power supply is provided directly to the primary winding 22 of the transformer 10. The high frequency AC signal may be at a frequency above 20kHz and may typically be from 50kHz to 200kHz or so and is therefore outside the normal range of human hearing. In such a case, the transformer switching controller 70 controls the operation of the high frequency switch which is used to invert the DC signal to the high frequency AC signal to achieve the desired frequency and voltage level for the AC signal that is provided to the primary winding 22 of the transformer 20. The high frequency switch may use one or more transistors, including for example MOSFETs and BJTs, which are controlled by the transformer switching controller 70 in this example.

The transformer switching controller 70 may be provided in the form of for example an integrated circuit (IC). In such case, transformer switching controller IC 70 may have a protection pin which receives the control signal which is output by the comparator 60 if the output of the rectifier switching controller 30 exceeds the reference as discussed above.

The circuit arrangement discussed above for the first secondary winding 24, namely the rectifier switching controller 30, the synchronous rectifier 40 and its output 50, the comparator 60 and its reference, may be duplicated or repeated for one or more others of the secondary windings 24 of the transformer 20 in the case that the transformer 20 has plural secondary windings 24 and corresponding outputs. In an example, the circuit arrangement discussed above is provided for each of the plural secondary windings 24. Importantly, this enables the voltage or power that is ultimately output to each output 50 of the switched-mode power supply 10 to be monitored and controlled separately and independently. This is not possible with known switched-mode power supplies which only have "simple" protection such as maximum power protection, maximum current protection or maximum voltage protection. Moreover, importantly, this arrangement enables different references to be set for each output of the switched-mode power supply 10, which can reflect the different expected power and/or voltage requirements of that different outputs.

In the example shown, the reference to the comparator 60 is provided by a square wave generator 80. The square wave generator 80 in this example is arranged to provide a square wave. The square wave is generated to have an amplitude that corresponds to the maximum gate voltage that is to be applied by the rectifier switching controller 30 to the transistor(s) of the synchronous rectifier 40 or, equivalently, an amplitude that corresponds to the maximum current that is to pass through the transistor(s) of the synchronous rectifier 40 under control of the rectifier switching controller 30. The frequency and/or duty cycle of the square wave is such as to correspond to the frequency and/or duty cycle of the output of the rectifier switching controller 30 which is provide to control the synchronous rectifier 40. This therefore provides a simple yet efficient arrangement for generating the reference for the comparator 60. Moreover, the value of the reference is easily amended or adapted as necessary, for example during manufacture of the switched-mode power supply 10, by appropriate adjustment of the square wave generator 80. Finally, in the case that there are plural secondary windings 24 in the transformer 20 and corresponding circuit arrangements which may be providing different output voltages, each circuit arrangement may have its own square wave generator 80 which may therefore be used to set a reference for the corresponding comparator 60 that is appropriate for the load that is being supplied by the corresponding output 50.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A switched-mode power supply (10) comprising:
a transformer (20), the transformer (20) comprising a primary winding (22) and at least one secondary winding (24);
a transformer switching controller (70) arranged to control the voltage of an alternating current which is input to the primary winding (22) of the transformer (20);
a synchronous rectifier (40) comprising an active switch for rectifying an alternating current which is output from the secondary winding (24) to a direct current which is to be output by the power supply (10);
a rectifier switching controller (30) arranged to provide an output to control the active switch of the synchronous rectifier (40); and
a comparator (60), the comparator (60) being arranged to compare the output of the rectifier switching controller (30) to the active switch of the synchronous rectifier (40) with a reference, the comparator (60) being arranged to output a control signal to the transformer switching controller (70) to cause the voltage of the alternating current which is input to the primary winding (22) of the transformer (20) to be reduced in the case that the output of the rectifier switching controller (30) exceeds the reference.

2. A switched-mode power supply (10) according to claim 1, wherein the active switch of the synchronous rectifier (40) comprises at least one transistor and the output of the rectifier switching controller (30) is arranged to drive the gate of the transistor.

3. A switched-mode power supply (10) according to claim 1 or claim 2, comprising a square wave generator (80) arranged to provide the reference in the form of a square wave.

4. A switched-mode power supply (10) according to claim 3, wherein the square wave generator (80) is arranged to synchronise the output square wave with operation of the synchronous rectifier (40).

5. A switched-mode power supply (10) according to any of claims 1 to 4, wherein:
the transformer (20) comprises a plurality of secondary windings (24) each for providing a respective output alternating current;
the switched-mode power supply (10) comprising:
a corresponding plurality of synchronous rectifiers (40), each synchronous rectifier (40) being arranged to receive an output from a respective secondary winding (24), each synchronous rectifier (40) comprising an active switch for rectifying an alternating current which is output from the respective secondary winding (24) to a direct current which is to be output by the power supply (10);
a corresponding plurality of rectifier switching controllers (30), each rectifier switching controller (30) being arranged to provide an output to control the active switch of the respective synchronous rectifier (40); and
a corresponding plurality of comparators (60), each comparator (60) being arranged to compare the output of a respective rectifier switching controller (30) to the active switch of the synchronous rectifier (40) with a respective reference, the comparator (60) being arranged to output a control signal to the transformer switching controller (70) to cause the voltage of the alternating current which is input to the primary winding (22) of the transformer (20) to be reduced in the case that the output of the rectifier switching controller (30) exceeds the reference.

6. A switched-mode power supply (10) according to claim 5, comprising a corresponding plurality of square wave generators (80) arranged to provide the references to the respective comparators (60).

7. A method of operating a switched-mode power supply (10), the method comprising:
controlling the voltage of an alternating current which is input to a primary winding (22) of a transformer (20) of the switched-mode power supply (10);
controlling an active switch of a synchronous rectifier (40) with an output of a rectifier switching controller (30) to rectify an alternating current which is output from a secondary winding (24) to a direct current which is to be output by the power supply (10); and
comparing the output of the rectifier switching controller (30) to the active switch of the synchronous rectifier (40) with a reference, and outputting a control signal to cause the voltage of the alternating current which is input to the primary winding (22) of the transformer (20) to be reduced in the case that the output of the rectifier switching controller (30) exceeds the reference.

8. A method according to claim 7, wherein the active switch of the synchronous rectifier (40) comprises at least one transistor and the output of the rectifier switching controller (30) drives the gate of the transistor.

9. A method according to claim 7 or claim 8, comprising providing the reference in the form of a square wave.

10. A method according to claim 9, wherein the square wave is synchronised with operation of the synchronous rectifier (40).

11. A method according to any of claims 7 to 10, wherein:
the transformer (20) comprises a plurality of secondary windings (24) each for providing a respective output alternating current; and
the switched-mode power supply (10) comprises:
a corresponding plurality of synchronous rectifiers (40), each synchronous rectifier (40) receiving an output from a respective secondary winding (24), each synchronous rectifier (40) comprising an active switch for rectifying an alternating current which is output from the respective secondary winding (24) to a direct current which is to be output by the power supply (10);
a corresponding plurality of rectifier switching controllers (30), each rectifier switching controller (30) providing an output to control the active switch of the respective synchronous rectifier (40); and
a corresponding plurality of comparators (60), each comparator (60) comparing the output of a respective rectifier switching controller (30) to the active switch of the synchronous rectifier (40) with a respective reference, the comparator (60) outputting a control signal to cause the voltage of the alternating current which is input to the primary winding (22) of the transformer (20) to be reduced in the case that the output of the rectifier switching controller (30) exceeds the reference.

12. A method according to claim 11, comprising providing each reference in the form of a square wave.
